# EUROPEAN PATENT SPECIFICATION

(11) **EP 3 940 171 B1**
(45) Date of publication and mention of the grant of the patent: **19.02.2025**
(21) Application number: 20186483.2
(22) Date of filing: 17.07.2020
(51) Int. Cl.: G01C 9/14, E04G 17/14, E04G 11/06, E04G 11/32, G01C 9/06

(54) **INCLINATION AND OFFSET DETECTION DEVICE**
NEIGUNGS- UND VERSATZDETEKTIONSVORRICHTUNG
DISPOSITIF DE DÉTECTION D'INCLINAISON ET DE DÉCALAGE

(43) Date of publication of application: 19.01.2022
(73) Proprietor: PERI SE, 89264 Weißenhorn (DE)
(72) Inventor: JÄRLEBERG, Mikael, 89264 Weissenhorn (DE)
(74) Representative: Müller Schupfner & Partner Patent- und Rechtsanwaltspartnerschaft mbB (Muc)

(56) References cited:
- EP-A1- 3 228 776
- WO-A1-2013/120271
- JP-A- H08 120 941
- JP-A- H08 312 148
- US-A- 5 481 809

## Description

The present invention is within the field of constructional engineering and in particular relates to construction of buildings, walls and structures by means of using formwork panels, scaffolds, and/or other constructional components which e.g. may be used for later filling with concrete. In particular the present invention relates to an inclination and offset detection device, a respective alignment system, a casing for use in such an alignment system and a method and a computer program.

When erecting large buildings, like administration buildings, skyscrapers, bridges, towers, walls, and/or other constructional structures, typically formwork panels, scaffolds, climbing structures and/or other structures that have to be aligned with respect to each other, may be used on site. Before erecting a concrete structure, typically formwork panels are erected and fixed to be filled with concrete. After a hardening or curing phase the formwork panel may be removed again. For erecting high buildings or structures, it is necessary to align several formwork panels on top of each other in order to provide a continuous plane.

When using one or in particular more than one of such component structures, e.g. more than one formwork panel, the problem arises to align the component structures without any inclination error and without any lateral offset in order to finally provide a continuous surface.

In state-of-the-art systems, a manual procedure was used for aligning the constructive components (e.g. formwork panels). However, this procedure is error-prone and oftentimes may lead to minor quality due to alignment errors. In this respect it has to be taken into account that a very small inclination error at the starting panel may result in a huge error at the topmost panel in case that more panels are to be used.

Document EP 3 228 776 A1 describes a climbing framework and a method for erecting of a concrete structure by successively casting a plurality of casting segments. A tilt sensor is used for measuring a tilt of a first form element. A measuring unit measures a horizontal distance between a lower end of the outer surface of the first segment and the upper end of the outer surface of the previous casting segment. A processing unit is provided communicating with the first tilt sensor and the measuring unit is used for calculating a target tilt of the first segment and determining a deviation between the actual tilt and the target tilt of the first segment.

Document WO 2013/120271 A1 describes a multifunction laser leveling tool comprising functionalities for determining and displaying the angle of a laser line and generating a laser line with a predetermined angle to be projected on a wall for providing constructional support.

Therefore, an object of the present invention is to improve the quality of the alignment procedure for constructive components and to provide easy to use and efficient means for guiding the worker on site to align the constructive components without an alignment error.

This object is solved by an alignment system for calculating an alignment dataset for alignment of a constructive component, by a casing for use in such an alignment system, by a method and a computer program according to the appended claims.

According to a first aspect of the present invention, an alignment system is provided for calculating an alignment dataset by using a processing unit. The alignment dataset may be used for alignment of a constructive component, in particular a formwork panel or a scaffold or a climbing structure or the like. The alignment system comprises:
- An attachment unit, which is configured to be non-permanently attached to or at the constructive component and which is further configured to non-permanently engage with a casing;
- The casing, which is configured to house, cover or case:
   o an electronic accelerometer unit with at least one accelerometer; the electronic accelerometer unit may preferably be fastened so that it can be rotated manually via an angular contact bearing to the attachment unit and
   o a pendulum unit, wherein the pendulum unit has a top part which is fastened on a lowermost part of the electronic accelerometer unit (in particular by means of a ball joint) thereby constituting a pivot point so that the pendulum can swing with 2 degrees of freedom respective to the pivot point, and wherein at a bottom part of the pendulum unit, a laser emitter is attached (preferably permanently attached), which is configured to emit a laser beam;
- A receiver unit, which is mounted on or at a base plate and which is configured to receive the laser beam, which has been emitted by the laser emitter in a spatially resolved manner;
- A processing unit for calculating the alignment dataset (which may comprise alignment instructions to be output on a user interface, e.g. on a mobile device), wherein the processing unit is in data connection (in particular wirelessly) with at least the electronic accelerometer unit. Optionally, the processing unit may also be in data connection with the receiver unit as well.
- Finally, the alignment system further comprises an output device for providing the calculated alignment dataset.

In a second aspect the invention refers to a casing in an alignment system as described above, wherein the casing is configured to house an electronic accelerometer unit and a pendulum unit. The pendulum unit is attached at a bearing of the electronic accelerometer unit as described above and wherein it further comprises a laser emitter which is configured to emit a laser beam. The casing together with the receiver unit is thus to be construed as electronic alignment device.

In a third aspect the invention refers to a method for calculating an alignment dataset for alignment of a constructive component. The method comprises the following method steps:
- Measuring a gravitational field strength matrix (i.e. a plurality of different gravitational field strength vectors) by means of an electronic accelerometer unit, being aligned in parallel with the constructive component to be aligned and providing the gravitational data item. The gravitational data item serves as a first part of the alignment dataset and indicates if an inclination error for the constructive component exists or not. In case an inclination error has been detected (automatically), mitigation instructions are calculated and provided for realignment of the constructive component by minimizing or even eliminating any inclination error;
- Emitting a laser beam by a laser emitter, being attached to a pendulum unit;
- Measuring a reception area of the emitted laser beam on a receiver unit and providing a pendulum data item as a second part of the alignment dataset.

In a fourth aspect the invention refers to a computer program comprising computer program code. The computer program code, when executed by a processing unit, causes the processing unit to execute the steps of the method, which has been described above.

In general, the invention relates to a mechatronic system with mechanical parts and electronic units. The electronic units are configured for data detection, storage, transfer and optionally for local processing. The data processing may be implemented in software and/or in hardware (e.g. by means of providing a microcontroller, a field programmable gate array FPGA and/or other integrated circuit boards). The data processing may be distributed over a plurality of processing units, which may be implemented on different components or parts of the system, which are interconnected by respective wireless or wired transmission means known in the art.

The electronic units together serve as measurement unit of the alignment system. The measurement unit, consisting of the electronic accelerometer unit and the corresponding receiver unit are configured to detect different sensors signals, in particular gravitational field strength signals, representing an inclination angle and optical signals, in particular illumination signals, representing, whether the laser beam hits the image sensor at the pre-defined target position and thus indicating the alignment or direction of the pendulum. The multipart, in particular two-part, measurement unit may be configured to transfer the detected signals wirelessly to the processing unit for data processing.

According to a preferred embodiment, the attachment unit may comprise at least two separate members or brackets, in particular levers, wherein each of the brackets is configured for being non-permanently attached to the constructive component at pre-defined positions. In a preferred embodiment, the formwork panel may be provided with apertures or receptables at predefined positions which are to engage with pins, provided at each of the brackets. Furthermore, the bracket could be equipped with an eccentric lock mechanism in order to provide the right pressure in the contact points between the construction component and the attachment units. Further, the attachment unit preferably engages with the casing in a sealed manner, in particular in a waterproof manner. In a preferred embodiment, this can be achieved by dual O-rings fitted to a fixed reference center, in particular a fixed bearing attachment, attached to the upper attachment unit (top fixing bracket) that seals towards the rotating tube casing.

According to another preferred embodiment, the output device and/or the processing unit may be provided on a mobile device, e.g. a tablet PC, a smartwatch a mobile phone etc. This has the technical advantage that the result with the alignment data set is directly provided to the worker irrespective of where the worker is actually positioned. Further, the alignment dataset may be provided in a different data formats, including an optical format (with a graphical representation of the alignment dataset), a textual format (with a short alignment text) and/or an acoustic format. The latter has the advantage that the worker is directly and instantaneously informed about possible alignment errors, irrespective of the fact whether or not he or she actively looks onto his mobile phone. Depending on the specific application, the output device may optionally or additionally be provided in the casing and/or on the receiver unit as well. This has the technical advantage, that the result with the alignment dataset may be provided to the user directly on the casing as part of a constructive component of the alignment system so that there is no need for the user (worker on site) to use his mobile phone. Further, the alignment dataset may be provided to a plurality of different electronic units in parallel (e.g. to a plurality of registered users of the alignment system and/or two different components of the alignment system, like the casing and/or the receiver unit). In particular the alignment dataset may be provided to a distributed system and may thus be spread to a plurality of workers (e.g. workers, working at the base level as well as workers, working on the top level of the construction/building). This feature helps to improve quality, as more than one user is provided with the alignment dataset.

Generally, the processing unit and the output device may be combined structurally so to be provided in one single unit, e.g. on a mobile device. In this embodiment, the mobile device is in data connection with the electronic accelerometer unit to receive the gravitational data item and is as well in data connection with the receiver unit to receive the pendulum data item. The processing unit, which in this embodiment may be implemented on the mobile device as well, is configured to calculate the alignment dataset based on the received data items.

However, in another embodiment the system does not make use of a separate mobile device and only uses the casing and the receiver unit. The casing and/or the receiver unit may be configured to comprise the processing unit and the output device as well. This makes it possible that the alignment dataset (representing the result of the alignment method) may be directly provided on the output device, which is formed on the casing and/or on the receiver unit. In this case, the output device may be implemented in a simple form, e.g. as an optical signaling unit, e.g. as light emitting diodes, which are configured to provide an optical signal which is associated to a first error less state (no inclination error, no offset error) or to provide another second optical signal which is associated to a second error state (inclination error) and optionally also a third optical signal, which may be associated to a third error state (offset error). In particular the different signals may be represented as color signals (RGB signals). Alternatively, the optical signals may be provided as continuous light emission or as an interrupted light emission signal sequence (e.g. pulsating light source with pre-defined pulsation patterns). Generally, the kind and type of signal representation, may be defined in a previous preparation phase. For example, in a very simple embodiment, it may be defined that
- roll error (first type of inclination error) is to be represented by a e.g. blue diode signal,
- a pitch error (second type of inclination error) is to be represented by the yellow diode signal,
- an offset error is to be represented by e.g. an orange diode signal and
- no error may be represented by a green diode signal. Other forms of signaling may be used instead (like different patterns or sequences of light flashes).

For a person skilled in the art it is clear, that also other types of signal representation, in particular more complex signal representations, may be defined. In particular the output device may be implemented as user interface (for example a graphical user interface) for providing the result with the alignment dataset in a graphical format and in addition also in a textual and/or acoustic format. Thus, the alignment dataset may be provided as an acoustic signal. In the same manner as light could be used for signaling, a predefined set of sound signals could be used either on its own or in combination with the light signals. This has the advantage, that the workers are free to move away from the alignment system by still being able to receive the result being provided; so, they may still listen to the sound signal, while adjusting the constructive component. For example, slow beeps in an increasing rate and duty cycle can be selected in a configuration phase as the adjustment is getting better and e.g. passing over in a continuous signal when the adjustment is "on spot".

The output device, itself, may be provided on one single unit, as mentioned above, or so on a plurality of different units (for example on the casing and/or on the receiver unit) so that the alignment dataset is provided in parallel on different devices.

In another preferred embodiment, it is possible, to transmit the alignment dataset to a secondary system (e.g. an Internet based server system) for further data processing. In particular, the alignment dataset may be stored in a storage (memory) for later reference. In still an alternative embodiment, artificial intelligence algorithms and machine learning algorithms may be used to process the stored data for predicting future alignment results or for improving the alignment system by minimizing errors.

In still another preferred embodiment of the invention, the data connections between the respective electronic units, in particular between the electronic accelerometer unit and the processing unit as well as between the receiver unit and the processing unit are based on wireless transmission channels, like WiMAX, Bluetooth, ZigBee and / or other forms of electromagnetic radiation-based transmission. Also, a transmission according to the standard IEEE 802.11 may be used. In a preferred embodiment, the electronic accelerometer unit is configured to send the gravitational data item to the processing unit via a first wireless transmission channel. Optionally, also the receiver unit may be configured to send the pendulum data item to the processing unit via another, second wireless transmission channel. The first wireless transmission channel and the second wireless transmission channel may be the same or may be different logical data channels but may be implemented by means of the same or with a different physical transmission protocol. The processing unit is configured to process the gravitational data item and/or the pendulum data item in order to provide the alignment dataset. The alignment dataset is provided on the output device.

In a less complex embodiment it is possible that only the electronic accelerometer unit is digitally coupled to the processing unit in order to process the data, whereas the receiver unit is built as uncoupled unit and is only provided with a simple signal output, for example with light emitting diodes. In this embodiment, the processing unit is "only" configured to process the gravitational data item. The pendulum data item may be provided as a binary result, indicating an error state (offset error) or an error-free state. As the pendulum data item is not transferred to the processing unit, there is no further processing of the pendulum data item in this embodiment.

In a preferred embodiment the electronic accelerometer unit comprises at least two accelerometer sensors, which are attached with a mutual offset on a carrier, like a circuit board, and may further comprise a connection module for data transmission, a microcontroller for data processing and/or a power supply, wherein variations from this structure are possible. For example, the power supply may be omitted and an energy harvesting unit may be provided in order to generate the necessary power itself (for example by transforming vibrations and/or position energy into electric energy). Further, the microcontroller may be skipped and swapped out to an external unit, e.g. the processing unit. In other embodiments, more than two accelerometer sensors may be used for signal detection. Generally, the accelerometer sensors are configured to detect deviations from the earth's gravitational field vector. Thus, the accelerometer sensors may be used as inclination sensors. The measurement result of the accelerometer sensors is expressed as a rotational matrix.

However, during manufacturing of the system, the two accelerometer sensors may not be positioned and aligned perfectly, which leads to an inaccuracy of the device itself, built in during manufacturing. This inaccuracy will, in turn, create a running error in the angular deviation from the earth's gravitational field and will result in incorrect result data in effect creating an ever increasing error that builds up as formwork panels are erected plane by plane. For resolving this problem, the invention suggests another preferred embodiment, in which the casing can rotate relative to the attachment unit, which may be configured as two separate attachment brackets. Further, the two accelerometer sensors are mounted in the casing with predefined offset. So, the casing, may be provided as a rotational symmetric structure, in particular as a tube. The tube may be made of extruded anodized aluminum with an outer diameter of about 80 mm, a length of about 1220 mm and a wall thickness of about 2 mm. The tube may have a weight of about 2.8 kg. Preferably, the tube may be protected by and carried with a protective soft case with shoulder straps.

Thus, for eliminating the running error due to inaccurate positioning during manufacturing and in order to get reliable measurement values, the casing is provided as rotational symmetric tube and is rotatable with respect to the two attachment unit members (in particular to the top and bottom fixing bracket). The technical advantage of providing the casing as the rotational member is, that the user may be forced to make several, in particular 2 to 8, and more particular 4 (four), subsequent readings in four different directions. For this purpose, the processing unit may provide rotating instructions for guiding the user to rotate the electronic accelerometer unit. In particular, the electronic accelerometer unit is to be rotated about 90° for four times. For example, the rotating instructions may be provided in a textual format, like *"Please rotate the device 90°".* After the 4 (four) measurements, a total rotational matrix is built using the subsequent readings. In a preferred embodiment, position sensors are provided to detect the rotational position of the device (electronic accelerometer unit). These readings or measurements are fed or transferred to the processing unit for data processing. With these 4 measurements it is possible to eliminate:
- the intentional offset stemming from the placement of the accelerometer sensors on the circuit board;
- the unintentional offset stemming from the inaccuracy of the placement of the accelerometer sensors and the circuit board during manufacturing;
- the unintentional offset stemming from the inaccuracy inherent in all accelerometers and
- the accelerometer inaccuracy error from the constructive component's (e.g. formwork panel etc.) roll and pitch error, which should be detected.

In a preferred embodiment, the casing is rotatable manually from one predefined angular position to the next one. It is also possible to rotate the casing automatically by a small motor drive and a respective user interface triggered activation signal.

Preferably, the two accelerometers are used in a range, where the sine function has the largest derivative. With other words, the two accelerometer sensors are to be used, so that a very small change in inclination gives a very large change in the measurement signal. Preferably, the range is an interval around pi. The measurement signals from the four readings are aggregated and combined to calculate the true roll and pitch inclination error. The misalignment error from the device itself can be cancelled out mathematically by combining the datasets from subsequent readings with for example a 90° rotation in between each reading.

The receiver unit is a small constructional element or component which is mounted on a base plate. The receiver unit is configured to receive the laser beam at a well-defined target position and so to say with two-dimensional resolution. In particular it is to be detected, whether the emitted laser beam hits the receiver unit at the target position or not. For this purpose, the receiver unit may comprise a housing for covering at least:
- a Fresnel lens for collecting and focusing the received laser beam onto its receiving window of an image sensor, and
- the image sensor, like for example a CMOS image sensor, wherein the image sensor needs not to have a very high resolution (for example 30 x 30-pixel sensor might be sufficient).

The receiver unit may further comprise levelling means for levelling the receiver unit so that it is aligned perpendicular to the earth's gravitational field vector. In a first embodiment, the levelling means may be provided as at least one further accelerometer unit with at least one accelerometer sensor. In a less complex second embodiment the levelling means may be implemented as a simple water level. Preferably, the levelling means are attached to the receiver unit such as the levelling means may be read-out easily by a worker during the course of construction. In particular the levelling means are not covered by the housing.

The receiver unit is thus a multipart unit and may comprise different plates as support structure. In particular, the receiver unit may comprise a first adaption plate for (in particular: permanent) support or attachment of the housing, as mentioned above and another second base plate or structure for attaching the receiver unit on the ground, floor, bottom or soil in front of the construction, wherein the adaption plate is adjustable attached to the base plate by means of adjustment means, like three adjustment knobs which may be activated manually for levelling the plane of the adaption plate with respect to the earth's gravitational field. The receiver unit may be manufactured from metal and/or polymer synthetic material and may for example have the shape of a triangle. The two legs may have the length of 100 mm to 300 mm, in particular 200 mm and the hypotenuse around 282 mm.

The method for calculating an alignment dataset may comprise different time phases:
1.A definition and installation phase - this phase is a preparation phase and needs to be executed before the alignment system may be used. This phase serves for attaching the attachment unit (which is preferably provided as a two-part attachment assembly) in or at the constructive component. After this, the (electronic) device is locked in place using the attachment unit or assembly so that the upper and bottom attachment unit part makes contact in two points each to the constructive component. Further, the receiver unit is positioned on the base level or ground on a predetermined distance of where the first constructive component is to be positioned. This predetermined distance is calculated from where the constructive component is to be placed and the offset that the center point of the pendulum inside the device will have when it is attached to the constructive component being used. Further the adaption plate is adjusted on the base plate by means of adjusting the knobs manually. The user may be supported and guided by provided installation instructions, which he or she may receive on his or her mobile device. Further, several configurations may be made. For example, the signaling may be configured (a selection menu may be provided for selecting a signaling for an error free state and the signaling for an inclination error and/or for an offset error). Further, the user may configure how he or she intends to receive the alignment dataset as a result. In particular he or she may decide to receive the alignment dataset only as a graphical representation on his mobile device or he may define to receive the same as an acoustic alert signal. Further, it may be defined, which output device should be used and/or how long the alignment dataset is to be provided on the output device or if the alignment dataset is to be validated by a validation signal.
2. The first measurement phase, during which the electronic accelerometer unit is activated and triggered for detecting the measurements, in particular for detecting any inclination error (roll and pitch error). The gravitational data item may be provided on the output device for guiding the user to re-align the constructive component.
3. In case of an inclination error there will be a re-alignment phase, in which the user may realign the constructive component. He or she may be supported with correction instructions. The correction instructions may be provided on the output interface and may guide the user how to re-align the constructive component, for example with a graphical, acoustic, and/or textual message like *"upper part of the panel is declined inwardly -> Push upper edge of the panel more to the front ".*
4.A second measurement phase, during which the laser emitter in the pendulum unit is activated and it is detected whether or not the laser beam hits the target position on the receiver unit, indicating whether there is an offset error or not. Depending on this measurement (position of the laser beam reception), the pendulum data item is provided and may be output on the output device.

This sequence of steps may be reiterated for each formwork level.

Thus, if the roll and/or pitch, detected in phase 2 (first measurement) is out of line, the offset reading will not mean anything - it will just be out of centre or perhaps in centre despite being offset (in combination with a roll/pitch that cancels the error out). Therefore, before the offset reading and after the inclination detection by means of the electronic accelerometer unit, it is first necessary to re-align the formwork panel in case of an inclination error. When the formwork panel has been adjusted so that it is within limits the laser emitter is activated and the image sensor is read to get a picture of where the laser hits. It is even possible to compensate for any residual roll and pitch since the user will probably never get it 100 % aligned. This residual error could then be stored in a storage so that a correction of the residual error on the next level is possible. The procedure may be repeated at least once when the formwork has been adjusted. However, preferably, it may be pre-configured that the last measurement part (phase 4) with the offset measurement will only be done once since it gives a continuous output, independent of the rotation angle of electronic accelerometer unit.

It has to be noted, that phases 2) and 3) mentioned above may also be executed repeatedly in order to successively align formwork panel vertically and without any inclination error. For example, in a first try the formwork panel is erected. A first measurement detects an inclination error of the erected formwork panel and provides this intermediate result as first alignment dataset. Based on this intermediate result, the worker re-aligns the formwork panel for the first time and again the second measurement is executed which shows that there is still an inclination error. So, the worker may have the option again to re-align the formwork panel for a second time. After this, the third measurement is executed which for example may show that there is no more inclination error. Thus, the measurement - re-alignment - sequence may be executed in sequence for several times.

A major advantage of the alignment method mentioned above is to be seen in that in providing the result, it is automatically differentiated between different error types. The system automatically detects whether the component is erected with an angular error / inclination error. Here again two different types of inclination error are differentiated, namely the error is detected in two different axes, namely a rotation around the Y axis (roll) as well as a rotation around the X axis (pitch). In this respect it has to be noted that within this application the transversal axis is named as X axis, the vertical axis is named Z axis and the third dimension is called Y axis. So, referring to a vertically erected formwork panel, the plane of the panel is in or corresponds to the plane defined by the X and Z axis, whereas the depth or thickness of the panel corresponds to or extends in the Y axis.

Besides detecting different inclination errors, the system automatically detects whether the component is erected with a lateral offset. All these detections are being provided to the user in order to guide him to remedy misalignment and to erect the constructive component without any errors.

Therefore, the alignment dataset may comprise three different portions:
1.a roll error portion, indicating a misalignment of the constructive component due to a roll error,
2.a pitch error portion, indicating a misalignment of the constructive component due to a pitch error and
3. an offset error portion, indicating a misalignment of the constructive component due to a lateral offset.

The three error portions are provided at different time phases. In particular the roll error portion and the pitch error portion are provided after measurement by the electronic accelerometer unit and the offset error portion may be provided later, after measurement by the receiver unit after providing the pendulum data item. The offset error portion of the pendulum data item respectively is only viable after the roll and pitch error - if any - has been corrected.

In a preferred embodiment, the alignment dataset may in addition comprise correction instructions which may guide user, how to re-align the constructive component in an error free manner. The correction instructions may be provided on the output device. The correction instructions may be provided in different, pre-configurable formats, like in a visual format with a graphical representation, showing how and in which direction and angle the formwork panel is inclined. The graphical representation may for example comprise a schematic figure as a virtual representation. Further, the correction instructions may comprise a textual and/or acoustic format. Preferably, the user may configure his personal preferences in the preparation phase.

However, in a preferred embodiment, the processing unit is not only configured to provide the correction instructions during the construction phase, but is also configured to provide further instructions in preceding time phases, namely in an installation phase and in the measurement phase during the measurement. Preferably, attachment instructions may be provided in the definition and installation phase, which support the user and guide him or her to attach the components and parts of the alignment system for being used. For example, attachment instructions may refer to the attachment of the receiver unit and the alignment of the adoption plate thereof (in particular by using the levelling means of the receiver unit).

Preferably, the processing unit may be configured to provide, i.e. calculate, installation instructions, serving for attaching the attachment unit to the constructive component, in particular for inserting pins of the upper and lower bracket into corresponding receptables, being provided in the constructive component. The installation instructions may also comprise instructions for attaching the casing to the attachment unit.

Moreover, the processing unit may be configured to provide rotation instructions for rotating the electronic accelerometer unit in measurement positions during the measurement phase. In particular the electronic accelerometer unit is to be rotated manually at predefined positions (by 90° rotation, the yaw, around the Z axis) for eliminating a running error that otherwise would have increased from level to level. Such device internal inaccuracies stem from inherent accelerometer inaccuracy or inaccuracies in the manufacturing process. For example, a message may be provided on the output device, indicating that the electronic accelerometer unit has to be rotated together with the casing 90° in a clockwise manner. The message may further contain more information, like: *"The next measurement is only possible, after the device has been rotated again by 90°* in order to facilitate operation of the alignment system. In a preferred embodiment, the rotating instructions are calculated dynamically in reply to position signals, received by (position) sensors, indicating an angular position of the electronic accelerometer unit with respect to the Z axis or constructive component respectively. For this purpose, another second integrated circuit board (in short: IC board) may be provided within the alignment system in particular at a top part of the casing. The second IC board might be rotationally symmetric and arranged in a plane being perpendicular to the length axis (in Z axis direction) of the electronic accelerometer unit. Thus, the second IC board may be rotated together with the electronic accelerometer unit and together with the casing. In order to fix the electronic accelerometer unit in its predefined (four) measurement positions, fixation means may be provided at the IC board and at the top fixing bracket as well which are to engage with each other, if the target measurement position is reached. If the user rotates the casing between a measurement position to the next one, a slight resistance with a following snap fit connection may be perceived which will give the user tactile feedback indicating that the casing has reached the next measurement position. This helps to simplify the alignment device. In this embodiment the electronic accelerometer unit comprises two IC boards:
1) a rectangular IC board 147 with at least one high precision accelerometer (and with preferably two accelerometer sensors for improving accuracy), extending in the Z axis within the casing; and
2) a circular IC board 148 with at least one additional high precision accelerometer, extending in the XY-plane furthermore with a spring-loaded steel ball actuating a circuit board mounted microswitch as it mechanically indexes between recesses in the upper attachment unit as the device is rotated. The rotation data (stemming from the rotation of the electronic accelerometer units) could be provided using a rotary encoder instead or in combination with the steel ball contraption. Another embodiment, refers to use a digital compass (with its data corrected by the data from the accelerometers).

At least the rectangular IC board 147 is configured to transmit the detected signals to the processing unit. In another advantageous embodiment, the circular IC board 148 may also be configured to transmit its detected rotational position signals to the processing unit as well.

The electronic accelerometer unit may consist of at least one accelerometer sensor, which is configured to measure the earth gravitational field vector and to calculate *the gravitational data item* (a very accurate roll and pitch of the construction component measured in more than one yaw angle of the device). An accelerometer perfectly mounted in the XY plane will, in an ideal and simplified case, measure 100 % of the gravitational acceleration along the Z direction. The inclination is calculated from the X and Y components of the gravitational acceleration appearing when the device is not 100 % perpendicular to the horizon. However, in a preferred embodiment, the device features more than one accelerometer whereas the two or more accelerometers are mounted in different planes, for example the XY and XZ plane respectively, and furthermore with an angular offset to maximize accuracy when the device is positioned in its normal operating position. Furthermore, the device (particularly, the electronic accelerometer unit) is rotated around the Z axis (yaw) during operation whereas massive amounts of data stemming from a multitude of readings from the accelerometers are collected. Each series of data from each subsequent reading around the Z axis is averaged respectively. The averaged data from each reading in each direction is then collected and further processed by the processing unit (microcontroller) in order to calculate *the gravitational data item* using a range of trigonometric functions and matrix equations.

Generally, four measurements are taken at different rotational positions by the electronic accelerometer unit for providing the gravitational data item and one measurement is taken by the receiver unit, providing the pendulum data item. The pendulum data item will be an RGB-value measured on each pixel. Preferably, mathematical filter algorithms (Wiener filter) or some other method may be applied to sharpen the edges of the projected beam. Then, the center of the beam is calculated - this is the resulting output - the pendulum data item.

These measurements are taken for alignment of one formwork panel. However, it is also possible to execute several measurements for one single formwork panel in order to improve quality by generating a mean of the measurement values. Thus, in a preferred embodiment one or more alignment dataset(s) are calculated for two or more positions for one constructive component. The measurements are taken by the measurement unit, consisting of the electronic accelerometer unit and the corresponding receiver unit. For example, in the preparation phase, it may be defined, how many measurements are to be executed for one single constructive component. In case more than one measurement is to be detected, a validation algorithm may be used for validating or verifying the sequence of measurements for one constructive component. This improves quality, because measurement errors may be eliminated or at least be reduced significantly.

The solution described herein makes use of a processing unit. The processing unit may consist of or comprise a CPU and/or a GPU and comprises several modules configured to perform the steps of the method described herein. The processing unit may be part of a computer or mobile computing device (smart phone, smart watch, handheld etc.). The computer may be implemented in or as a data processing system. Said data processing system may thus comprise a computing device or a cluster thereof. The data processing system comprises a processing unit and storage means, which are in data communication with one another.

The invention may use a set of algorithms. An algorithm is, in particular, a collection, e.g. a sequence, of instructions for processing input information to obtain output information. The instructions of an algorithm may be implemented in a computer and executed by a processor e.g. of the data processing unit. In particular, the input information of the algorithm is encoded in input data (here: measurement data of the accelerometer sensors and the receiver unit) that may be accessed by the processor carrying out the algorithm. In particular, the processor processes the input data according to the instructions of the algorithm to generate output information, which, typically, is encoded in output data. According to the present invention, in particular, an algorithm processes data when the algorithm comprises instructions, which, when executed by a processor, cause said processor to process these data.

The processing unit may be configured to execute the decision algorithm, the validation algorithm or further data processing algorithms. In a more complex configuration, a machine learning algorithm may be used, which comprises instructions for processing input information to obtain output information and at least some of these instructions are set by using a set of training data and a training algorithm. The machine learning algorithm may comprise an Artificial Neural Network (ANN), a decision tree, a random forest, a support vector machine (SVM), or the like. For example, the machine learning algorithm may be a convolutional neural network (CNN) and/or a deep neural network (DNN), such as AlexNet. In particular, an ANN is an algorithm that maps an ANN input into an ANN output and that comprises a plurality of interconnected nodes, each node mapping an input into an output by means of an activation function, which may be node dependent. In particular, the activation function of a node may depend on a bias and on one or more weights weighting the data items of the input of said node. The values of the weights of the ANN may be obtained by training the ANN by means of at least a training set and a training algorithm. According to an exemplary training algorithm, the values of the weights are iteratively adjusted so as to minimize the value of a cost function which, typically, depends on the weights of the ANN, the ANN inputs, the ANN outputs, and/or the biases.

Generally, a computer program may be stored on a suitable medium, such as an optical storage medium or a solid-state medium, supplied together with or as part of other hardware, but may also be distributed in other forms, such as via the Internet or other wired or wireless telecommunication systems. The computer program may be or may comprise an executable for execution on a processor or processing unit. The computer program may be provided in distributed manner, and may thus be distributed between several computing entities, such as processors. For example, the computer program may be distributed (stored, loaded and/or executed) on different computing entities, like a set of clients (acting e.g. as IoT devices, like the electronic accelerometer unit, the receiver unit and/or the mobile device and/or a server), so that a portion of the computer program resides on a first computing entity and another portion resides on a second entity. The computer program may comprise program modules, which may include routines, programs, objects, components, data structures, etc. to instruct the computer to perform a task(s) by data processing in particular of abstract data types.

The storage means may comprise volatile primary memory (e.g. a RAM, a DRAM, a SRAM, a CPU cache memory or the like) and/or non-volatile primary memory (e.g. a ROM, a PROM, an EPROM or the like). In particular, the volatile primary memory may consist of a RAM. For instance, the volatile primary memory temporarily holds program files for execution by the processing element and related data and the non-volatile primary memory may contain bootstrap code for the operating system of the data processing system. The storage means may further comprise a further memory, which may store the operating system and/or the instructions of the algorithms used to execute the alignment method. Moreover, the further memory may store a computer program product comprising instructions which, when the computer program product is executed by the data processing system, cause the data processing system to carry out the method described herein.

The further memory, the primary memories, and the processing unit need not be physically housed within the same housing and may instead be spatially separated from one another. In particular, the further memory, the primary memories, and the processing unit may be spatially separated from one another and may exchange data with one another via wired and/or wireless media.

The alignment system makes use of a data processing system, which may comprise an input/output (I/O) interface which allows the data processing system to communicate with input/output devices (e.g. displays, keyboards, touchscreens, printers, mice, cameras, or the like). The data processing system may further comprise a network interface controller (NIC) configured to connect the data processing system with a suitable network. A suitable network may for instance be an intranet, the internet or a cellular network.

The computer may operate in a networked environment which defines physical connections to one or more remote computers. The remote computer may be another personal computer, a server, a router, a network PC, a peer device or other common network node, and may include many or all of the elements described above. The physical connections include a local area network (LAN) and a wide area network (WAN), an intranet and the Internet.

The output device may comprise a display unit. The display unit may be provided as a monitor, integrated into a mobile device. It may be a touch display.

The processing unit may comprise hardware and software components, the latter also in the form as embedded software and/or algorithms. The CPU may comprise or may be provided as a microcontroller, microprocessor, field programmable gate array (an acronym is "FPGA") or an application specific integrated circuit (an acronym is "ASIC"). The CPU may serve to execute different internal functions of computing entities of the alignment device. In addition to this, the CPU may further be designed to generate a set of alarm messages and to trigger the detection of measurements and/or to issue the result dataset in the form of the alignment dataset and to prepare it to be displayed on the display unit, i.e. to calculate a graphical representation of the result data (optionally including graphical elements) for being displayed on e.g. a monitor of a mobile device.

Alternatively, or in conjunction with the above, the method may further comprise the step of:
- generating a virtual representation of the alignment dataset as a result.

The virtual representation of the alignment dataset may be stored and provide an automatically generated documentation of the countermeasure procedure carried out by the user manually (re-alignment of the panel) or by actors (robots) or machines (machine supported alignment). Alternatively, or in conjunction with the above, the virtual representation may be used to automatically validate and, if needed, correct the procedure. Moreover, by using the virtual representation, the system may automatically infer the procedure to be carried out and in addition the user may be led towards a sequence of steps to be taken.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality.

In a preferred embodiment, the system time may be measured by a system clock of said processing unit. This has the advantage, that further time-related data processing is feasible, e.g. how long the re-alignment procedure takes and corresponding improvement times.

The order, according to which the steps of the method are described in the present specification, does not necessarily reflect the chronological order, according to which said steps are carried out.

The properties, features and advantages of this invention described above, as well as the manner they are achieved, become clearer and more understandable in the light of the following description and embodiments, which will be described in more detail in the context of the drawings. This following description does not limit the invention on the contained embodiments. Same components or parts can be labeled with the same reference signs in different figures. In general, the figures are not for scale.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

- Fig. 1: shows an overview figure of the alignment system in a systematic manner;
- Fig. 2: represents a formwork panel as one type of constructive component with the three axis, X axis Y axis and Z axis;
- Fig. 3: shows a more detailed view of a top fixing bracket and attachment unit together with a rotating body of the alignment system according to a preferred embodiment of the invention;
- Fig. 4: shows a more detailed view of four pre-defined rotating positions in the fixed bearing attachment mounted in the top fixing bracket;
- Fig. 5: is a schematic figure, representing the electronic parts of the alignment system and its respective communication channels for data transfer;
- Fig. 6: is a schematic representation of an alignment dataset with different parts;
- Fig.7: shows the receiver unit with more details,
- Fig.8: is a flow chart of the method for aligning the constructive component according to another preferred embodiment;
- Fig. 9: is a more detailed view of the attachment unit according to a preferred embodiment and
- Fig. 10: is a more detailed view of the support structure according to a preferred embodiment.

### DETAILED DESCRIPTION OF EMBODIMENTS AND THE DRAWINGS

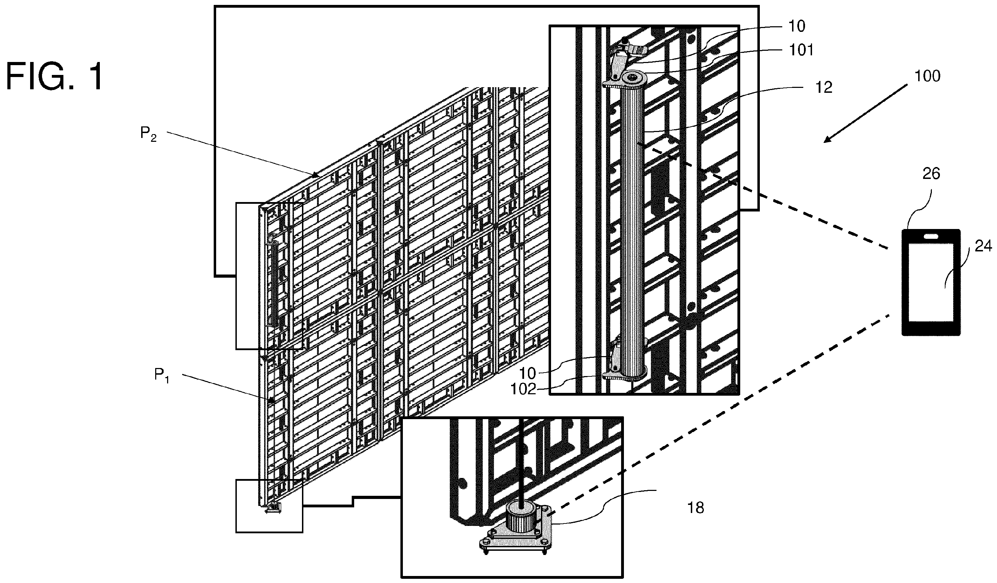

As can be seen in Fig. 1, the present invention refers to an alignment system 100 for calculating an alignment dataset ADS for supporting a worker at a construction site for erecting a constructive component, like a formwork panel P or another type of constructive component, like a scaffold or the like. The formwork panel P needs to be aligned vertically in order to provide a continuous plane. For building high structures, it is necessary to attach several such panels P₁, P₂ on top of each other. In some applications, for instance, it is necessary to erect two of such panel constructions with a small distance in order to fill the same with concrete. Therefore, it is necessary to align the panels perfectly vertically so that the concrete structure is not inclined, not twisted and not somehow angled with respect to each other. Further, it is necessary, to assure that the formwork panels P are not erected with a lateral offset in order to be able to provide a continuous and smooth surface.

The solution described herein provides an alignment system 100, mainly consisting of three parts:
1) a casing 12, with electronic modules inside and which is to be attached at the formwork panel P by means of an attachment unit 10;
2) the receiver unit 18, which is attached at the ground in front of the formwork panel P and which may optionally also be equipped with electronic modules inside;
3) an electronic device 26, for instance a mobile phone, associated to the builder or a construction worker with an output device 24. As a result of the alignment method or system 100, the alignment dataset ADS is provided on the output device 24 in order to assist the builder in erecting and vertically aligning the formwork panel P. The electronic device 26 may be implemented on the casing 12 and/or on the receiver unit 18, so that only 2 parts are necessary and the alignment system may only consist of two parts.

As indicated in Fig.1 by the two rectangles, each showing an enlarged view - one for the casing 12 with the electronics and one for the base receiver unit 18. Both of these units 12, 18 are in (preferably wireless) data exchange with a mobile device 26, e.g. a smartphone or another smart device, which is indicated in Fig. 1 with the dashed line. The data connection may be used for data transmission of several data sets, in particular for the alignment dataset ADS. The data transmission may be executed by applying different protocols. Thus, the data transmission may e.g. be operated according to a push mode, where the electronic modules of the system, namely the electronic accelerator unit 14 and/or the receiver unit 18 send "their" data packages to the mobile device 26 as soon as they are generated. Another option is, to operate the system 100 in a pull mode, according to which the mobile device 26 requests the data packages from respective entities 14, 18 according to a predefined transmission pattern (time-based or event-based).

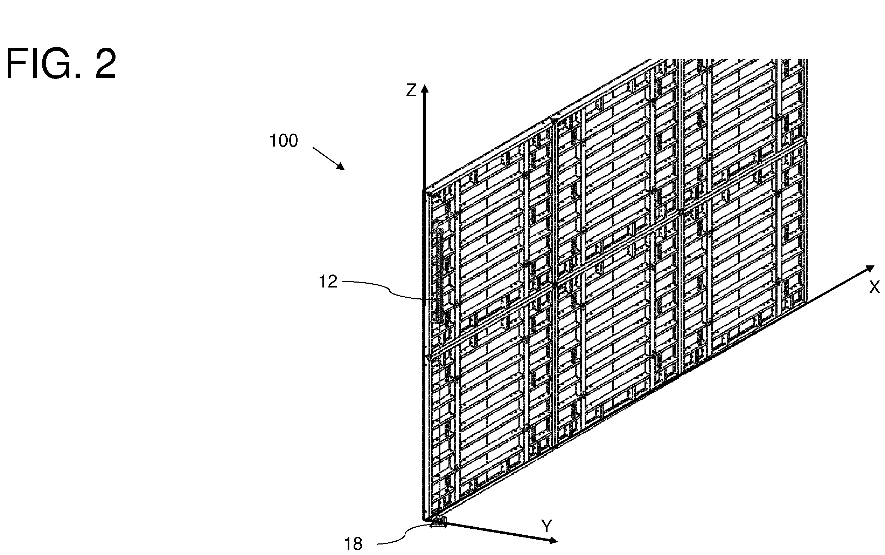

In the following the dimensions are further specified with respect to Fig. 2. As can be seen, the formwork panel P is erected approximately vertically in the plane which is within the X and Z axis. The Y axis is perpendicular to the X axis and Z axis as well. The extension of the formwork panel P in the Y axis is relatively low, compared to its extensions in the X axis and Z axis. As can be seen in figure 1 and 2, several of such formwork panels P may be erected on top of each other to build or wall-like structure. Starting from the bottom most formwork panel P, it is necessary to assure that the panel P is aligned vertically in order to eliminate any inclination errors. Generally, there may be more than one inclination error. The panel P may be rotated around the X axis (pitch error) or the panel P may be rotated around the Y axis (roll error's) by mistake. Both types of inclination error are automatically detected by the alignment system 100 according to the solution described herein. Of course, also a yaw error may exist (rotation around the Z axis) - however this type of error is easy to correct manually (by means of a batter board or other indications of the outline of the building to be constructed). Further, it is to be noted that yaw errors will result in an offset error, which is detected automatically by the alignment system described herein.

The casing 12 is attached to the formwork panel P by means of the attachment unit 10 so that the casing 12 with the electronics inside is perfectly aligned in parallel to the Z axis extension of the formwork panel P. With other words the casing 12 (with its length axis) is attached in parallel to the formwork panel P.

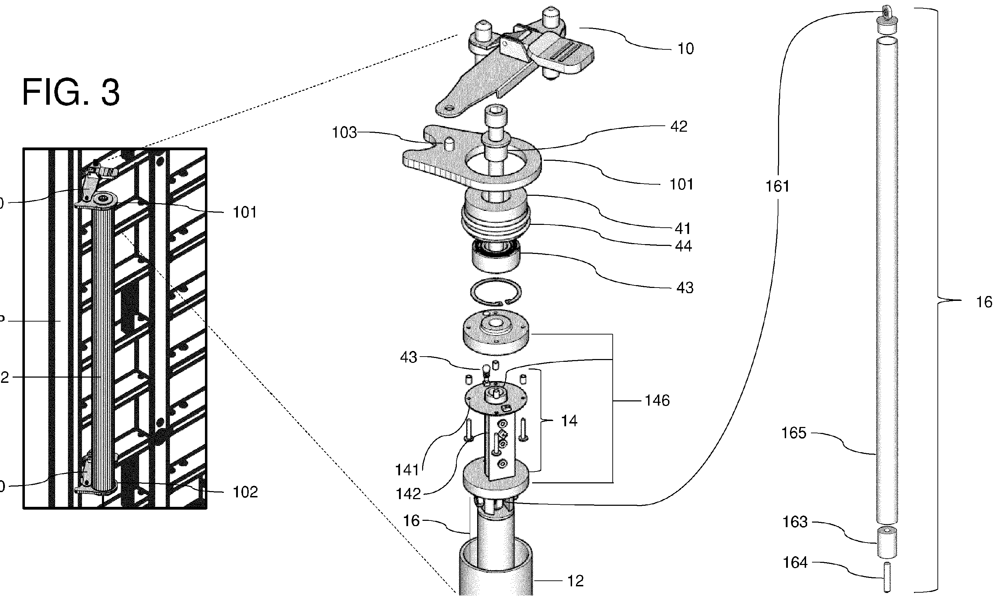

The attachment unit 10 connects the fixing brackets 101, 102 and the constructive element P thus supporting the casing 12, which serves as housing the main electronic module (besides the receiver unit 18). Therefore, for convenience the set of electronic modules is also mentioned herein in short as 'casing'. **Fig. 3** shows on the left-hand side the top and bottom fixing brackets 101, 102 and the attachment unit 10 of the casing 12, attached to the panel P. As indicated by the two dotted lines in Fig. 3 a more detailed view with parts shown in a retracted manner is shown for better understanding. Further the on the right side, the parts are shown in more detail below a pivoting point 161, as indicated in Fig. 3 by the curved line, pointing to both occurrences of reference numeral 161.

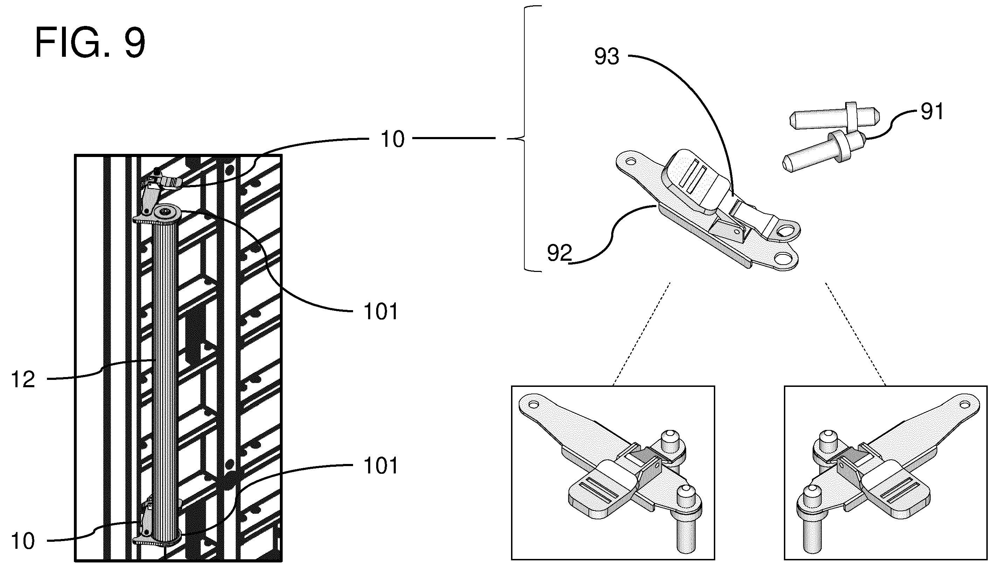

As can be seen in the retracted view of figure 3, the top fixing bracket 101 has a plate like structure, which comprises at least one engagement pin 103 for engagement with a corresponding respective aperture or receptacle, which is mounted at a pre-defined distinct position in the formwork panel P. By introducing the engagement pin 103 into the aperture of the formwork panel P or the attachment unit the top and bottom fixing bracket will be attached to the formwork panel P. The corresponding part, namely the bottom fixing bracket 102 is provided at the bottom of the casing 12 and is also attached to the formwork panel P in the same manner. For mounting the casing 12 to a constructive component such as a formwork panel P an eccentric lock mechanism may be provided. This mechanism will be described in more detail with respect to Fig. 9 below.

The top fixing bracket 101 further comprises means for engagement with an electronic accelerometer unit 14. The electronic accelerometer unit 14 is housed in the casing 12 in a waterproof manner. For this purpose, for example, dual O-ring seals are provided on a fixed bearing attachment 41. The fixed bearing attachment 41 further may comprise an angular contact bearing, a circlip and known means in the art for engagement with the electronic accelerometer unit 14 enabling it to rotate together with the casing 12 respective to the top fixing bracket 101 and the bottom fixing bracket 102.

The outer casing tube - or short "casing" 12 - is fixed so that it can rotate relative to a mount or support structure. Thus, it is perfectly aligned with the formwork panel P. The earths gravitational field pulls the pendulum unit 16 downwards and since it can rotate around both the x and y axis it aligns itself to be always perpendicular to the horizon. To further improve the performance of pendulum unit's 16 a pendulum ballast 163 may be attached to a pendulum support structure 165 in order to facilitate a centre of gravity as far away from a pivoting point 161 as possible. The whole assembly with the casing 12, the electronic accelerometer unit 14 and the pendulum unit 16 can in turn also be rotated around the z axis manually. As an advantage, no calibration is necessary for the alignment system - the system provides a self-calibration.

The electronic accelerometer unit 14 comprises a support structure 146 (manufactured from metal or plastic material), which is rotatable around the Z axis. In particular the electronic accelerometer unit 14 is rotatable together with the outer casing 12. The electronic accelerometer unit 14 comprises a first IC board 147 which is attached to the support structure 146 and which may have a rectangular form, wherein the length axis of the rectangle is directed in the vertical dimension (parallel to Z axis). The electronic accelerometer unit 14 consists of at least one accelerometer sensor, and in particular comprises two accelerometer sensors 141, 142, which are attached with a mutual offset. The mutual offset between the two accelerometer sensors is used for eliminating any manufacturing error and for calculating with mean values of the at least two sensor signals. The two accelerometers 141, 142 are used so that the processing unit 22 can process the data in the range where the sine function has the largest derivative, that is where a very small change in inclination gives a very large change in the output signal. Experiments and mathematical calculations have shown that the range is preferably around pi.

The electronic accelerometer unit 14 may further and optionally comprise a second circular IC board 148 which is attached perpendicular to the rectangle IC board. The circular IC board 148 is also attached to the support structure 146 and is provided for measuring the angular position of the electronic accelerometer unit 14 (which is identical to the angular position of the casing 12, as both parts are rotated together) with respect to the Z axis. As known in the art, both IC boards are equipped with respective components in order to detect, store and/or transmit the detected signals (for instance with a power supply, a microcontroller and/or storage unit etc.). In a preferred embodiment, at least one of the IC boards 147, 148 may comprise a processing unit 22 for local data processing. Alternatively, the detected sensor signals may be transmitted via a connection module 143 to separate external processing unit 22, which for example may be deployed as cloud-based server or as a processing unit 22 of a mobile device. In the latter case, the data processing may be implemented by means of an application.

As indicated in figure 3, the outer casing 12 may have a rotational symmetric, in particular a tubular form and serves as a protective tube. It can be manufactured of aluminum or steel. Preferably, the tube-like casing 12 has a length between 1000 mm and 1500 mm, and more preferably around 1220 mm. Its diameter may be in the range between 50 mm and 100 mm, and more particular about 80 mm. The wall thickness may be around 2 mm.

As can be seen in figure 3, the support structure 146 may comprise a cylindrical main body, which has an upper part for supporting the circular IC board 148and the lower part which comprises a pivot point 161, in particular a ball joint for engagement with the pendulum unit 16. The pendulum support structure 165 is attached at a ball joint such as the pendulum support structure 165 may swing with 2 degrees of freedom around a pivot axis of the ball joint, which corresponds to a length axis of the support structure 146. In this way, the electronic accelerometer unit 14 with the at least one or two accelerometer sensors 141, 142 and the laser emitter 164 and optionally with a pendulum ballast 163 is always aligned in parallel with the formwork panel P, whereas the pendulum unit 16 within the casing 12 is always parallel to the earth's gravitational field (because it can swing freely in 2 axes within the casing 12).

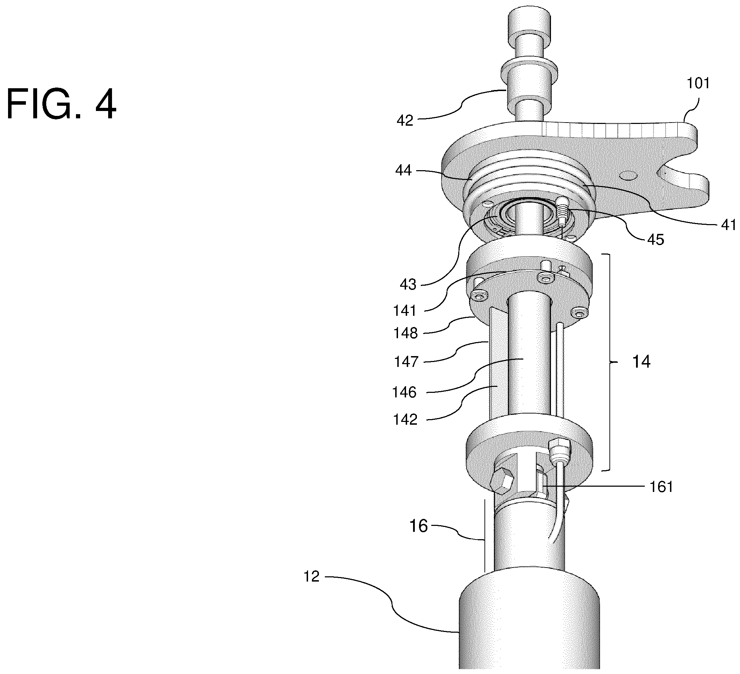

**Fig. 4** shows the rotatable accelerometer unit 14 with surrounding structures and a pendulum 162 with its mounting and housing in more detail. At the top in Fig. 4, a rotating hub 42 can be seen. Attached to the top fixing bracket 101 is the fixed bearing attachment 41 that in turn connects to the support structure 146 through an angular contact bearing 43. The fixed bearing attachment 41 connects to the casing 12 in a sealed manner while still allowing it to rotate by providing one or more sealings 44, in particular o rings. Preferably, four (4) screws are distributed around the circumference of the support structure 146 of the electronic accelerometer unit 14, which serve for fixing the circuit board to the rotating body of the electronic accelerometer unit 14. The fixed bearing attachment 41 preferably have four recesses spaced 90 degrees to receive a spring-loaded steel ball 45 mounted in the rotating support structure. The steel ball is configured to interact with respective indexing recesses in the fixed bearing attachment 41 that is firmly attached to the top fixing bracket 101 in essence giving the user a tactile feedback of each indexed position as the casing 12 together with the electronic accelerometer unit 14 is rotated with respect to the fixed bearing attachment 41 and furthermore by the means of a pin to actuate a microswitch on a top circular circuit board 148. In a preferred embodiment, a rotary encoder may also be used to detect the exact angular position of the accelerometer unit 14. The angular position sensor signals or the pulses created by the microswitch may be transmitted to a processing unit 22 for calculating rotating instructions, which may be given to the user.

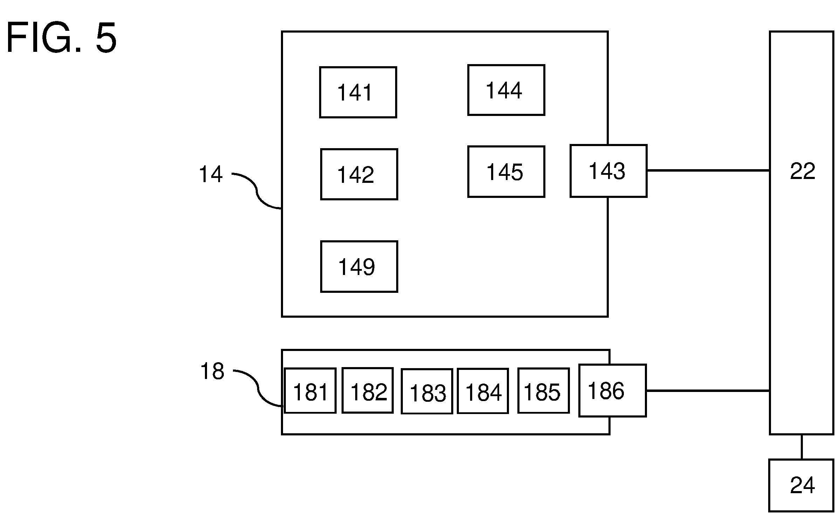

The message transfer between the electronic components of the alignment system 100 is shown schematically in **Fig. 5****.** The electronic accelerometer unit 14 comprises the first accelerometer sensor 141 and at least a second accelerometer sensor 142. In a preferred embodiment, the electronic accelerometer unit 14 may additionally comprise a connection module 143 (for message transfer and communication connection to the processing unit 22), a microcontroller 144 and a power supply 145. It is also possible to provide the electronic accelerometer unit 14 with a local storage 149 for storing or at least buffering detected data. The data connection between the electronic accelerometer unit 14 and the processing unit 22 preferably is a wireless data connection (Bluetooth, ZigBee, or other forms of electromagnetic radiation, e.g. based on IEEE - 802.11, WLAN, LAN or others).

The receiver unit 18 may preferably also comprise a data connection module 186 for data transmission to the processing unit 22. Preferably, also this data connection is a wireless data connection. The processing unit 22 serves to calculate the alignment dataset ADS as a result. In a first embodiment, the alignment dataset ADS is calculated and/or provided on the processing unit 22, which does not necessarily be part of the receiver unit 18. In a second embodiment, the alignment dataset ADS is calculated and/or provided locally on the receiver unit 18 by means of a local microprocessor 185. The receiver unit 18 may preferably also comprise adjustment means 181, in particular adjustment knobs, which may be turned to adapt the plane of an adjustment plate 187 with respect to the base plate 20 in case of uneven or rough terrain or ground. Further, the receiver unit 18 may comprise a Fresnel lens 182, an image sensor 183 and optionally - as mentioned above - a microprocessor 185 and/or the output device 24.

The alignment dataset ADS is provided on the output device 24. In a more complex environment, it is possible to provide the processing unit 22 on a server, for example on a cloud-based server on which more functionality may be provided. For example, machine learning algorithms may be implemented thereon in order to calculate further segments of the alignment dataset ADS based on historic data and reference data. For example, it is possible to learn from previous measurements and/or to estimate future predictions for the alignment dataset. It is also possible, to provide metadata META with respect to the detected data. The metadata META for example may refer to alert or warning signals, in case the detected measurements may not be within the normal range of values. Further, the metadata META may comprise time-related values, who long a re-alignment procedure did take and how often such procedures have been performed.

In another embodiment, it is also possible to provide the processing unit 22 on a mobile device 26, associated to a construction engineer or a user of the alignment system 100. The output device 24 may be implemented as a graphical user interface (GUI) or user interface (UI) of the mobile device 26. Referring back to figure 5, the output device 24 and the processing unit 22 may then be deployed on the same electronic device.

In still another embodiment, the output device 24 may also be deployed at the electronic accelerometer unit 14 and/or at the receiver unit 18. In this embodiment, the alignment system 100 may be used completely without the need to carry a separate mobile device.

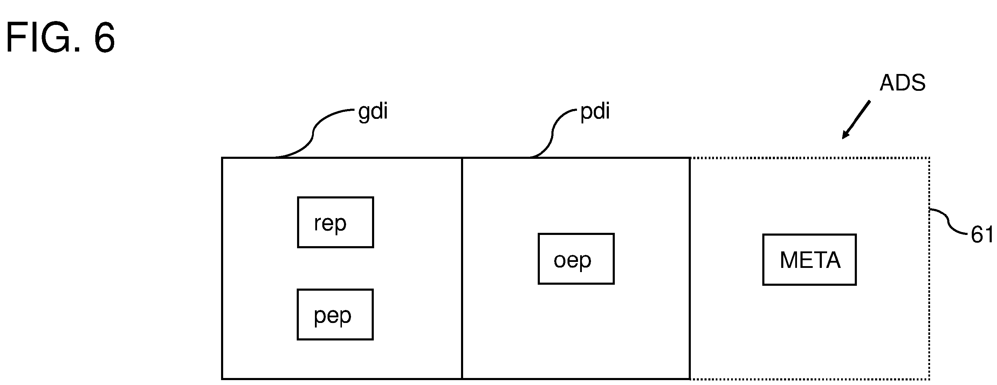

Fig. 6 shows the alignment dataset ADS in a schematic form. The alignment dataset ADS consists of at least two parts, a first part with the gravitational data item gdi and a second part with the pendulum data item pdi. Both the data items gdi, pdi may be provided to and received by the processing unit 22, in particular in different time phases. First, the gravitational data item gdi is provided and second the pendulum data item pdi will be shown. The gravitational data item gdi stems from at least two accelerometer sensors 141, 142 and the pendulum data item pdi stems from the image sensor 183 of the receiver unit 18. Thus, both data items gdi, pdi are detected from different entities or units, namely from the electronic accelerometer unit 14 and from the receiver unit 18. The gravitational data item gdi represents a roll error and thus comprises a roll error portion rep and represents pitch error and thus comprises a pitch error portion pep. The pendulum data item pdi represents an offset error (if the panel P has been erected with a lateral offset or not) and thus comprises an offset error portion oep. Moreover, in another preferred embodiment, the alignment dataset ADS may optionally and in addition consist of another data item 61 for metadata META - in particular time-related data - as mentioned above. This is shown in Fig. 6 in dotted lines, because this additional data item is not mandatory.

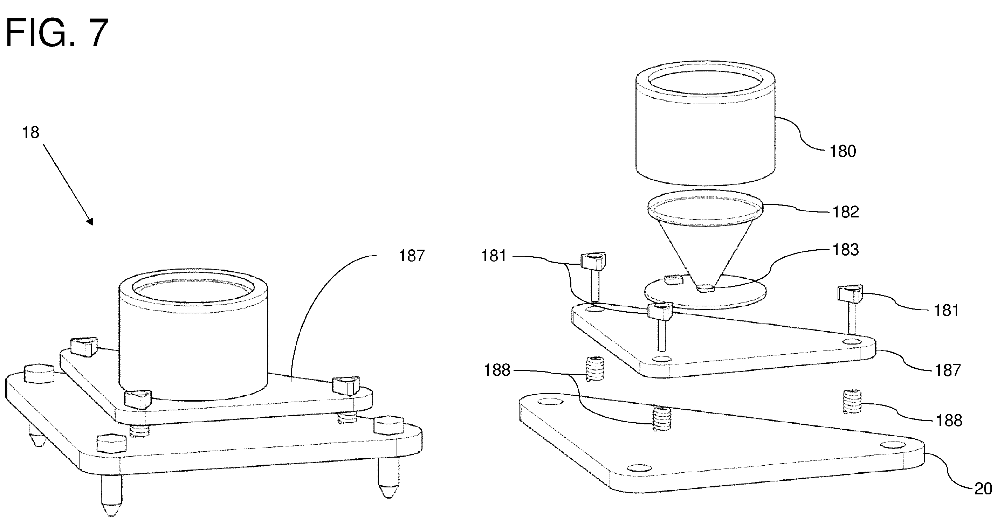

Fig. 7 shows the receiver unit 18, which is mounted on a base plate 20 in more detail. On the left side, the receiver unit 18 is depicted in an assembled state, whereas on the right, its parts are shown in a retracted manner with more details. The receiver unit 18 comprises optical and electronic elements which are covered by a housing 180. A Fresnel lens 182 serves for collecting and focusing the received laser beam, which has been emitted by the laser emitter 164 at the bottom part of the pendulum support structure 165. In particular, the solution described herein makes use of a positive focal length Fresnel lens, used as a collector. Further, an image sensor 183 is protected by the housing 180 and is configured to receive the collimated laser beam. The receiver unit 18 further may comprise levelling means 184 (e.g. water level or another accelerometer or other means) for measuring the level of the adjustment plate 187 for being able to level the same by operating the adjustment means 181 so that the receiver unit 18 is aligned perpendicular to the Earth's gravitational field vector. The adjustment means 181 may be constructed as three adjustment knobs, which may be rotated or turned for height adaption of the adjustment plate 187 with respect to the base plate 20. This height adaption may be done at three different positions, so that the plane of the image sensor may be perfectly aligned being perpendicular to the gravitational field vector. The foundation slab of a building is not always perfectly horizontal and since the concrete surface could be uneven it is necessary to be able to adjust the adjustment plate 187. It is important that the Fresnel lens is horizontal otherwise the laser beam will enter with an angle and give false readings. Preferably, the adjustment means 181 may be implemented as another accelerometer sensor or may be implemented as simple mechanics or water level. The adjustment means 181 and the levelling means 184 are provided on the receiver unit 18 on a position which is easy to monitor and in particular outside the housing 180. In a preferred embodiment, the receiver unit 18 may also comprise a connection module 186 for data connection and message transfer to the processing unit 22. As can be seen in Fig. 7 three helical springs 188 may be provided for the purpose of height adaption and engagement with the adjustment means or knobs 181.

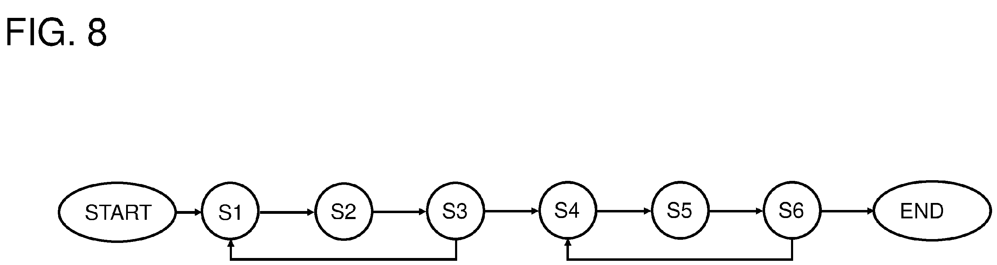

Fig. 8 is a flow chart of method steps for calculating the alignment dataset ADS according to a preferred embodiment of the solution presented herein. After start of the alignment procedure in step S1, a gravitational field strength is measured. This measurement is repeated for four times in the four dedicated, predefined measurement positions of the electronic accelerometer unit 14. This measurement serves to provide the gravitational data item gdi in step S2, which indicates if an inclination error for the constructive component P exists or not. In case there is an inclination error detected, the specific type of inclination error is detected by means of using the decision algorithm and this will be provided to the user via the output device 24. This gives the user the option, to correct and realign the formwork panel P to be perfectly vertical. For this purpose, correction instructions ci may be provided in step S3 on the user interface of the output device 24 to guide the user. This procedure of measurement - inclination error detection - calculation of correction instructions ci - realignment of the panel P may be reiterated in order to minimize or even eliminate the inclination error. In step S4, the laser emitter 164 is activated to emit the laser beam. In step S5, it is detected or measured if the laser beam hits the image sensor 183 of the receiver unit 18 at the target position or not. This detection or measurement serves as pendulum data item pdi, which then maybe provided to the output device 24 in step S6. All or a subset of measurements may be stored in the storage 149 or in another (e.g. a central) storage for data processing.

Generally, the alignment system or method may be used for all levels of the formwork, starting from the first one until the top most panel. Referring to a time sequence, the first formwork panel is erected and the alignment device (casing 12) is attached to the panel. The application forces the user to take for subsequent readings in all directions. The application then forces the user to adjust the panel so that it is perfectly aligned with the earths gravitational field vector (i.e. without any inclination errors). This could mean repeating the process of taking readings. When the panel is aligned to the gravitational field vector any offset is adjusted by making sure the laser hits the Fresnel lens on the receiver unit 18 in the exact center (which has been predefined as target position). Concrete may possibly be poured into the formwork (optional). The measurement steps (readings) are repeated for the next level of panels.

In another preferred embodiment, more assistance and guidance may be provided to the user. In the installation phase, the processing unit 22 may be configured to provide attachment instructions ai to the user which may help him to attach the casing 12 between the top and bottom fixing bracket 101, 102 and/or for attaching the attachment unit 10 at the constructive component P. In particular, a step-by-step procedure may be output on the output device.

In the installation phase, the processing unit 22 may further be adapted for providing installation instructions ii for aligning or levelling the receiver unit 18 by means of the adjustment means 181. This type of installation instructions serves to calibrate the plane of the image sensor (which is identical to the adjustment plate 187) so that it extends perpendicular to the earth's gravitational field vector. The installation instructions may for example be provided with the message "turn knob A". The message may be appended by a graphical representation which of the three knobs of the adjustment means 181 needs to be turned in which direction. This feature has the advantage of providing support in the most efficient manner.

In a measurement phase, the processing unit 22 may further be configured to provide correction instructions ci, which may provide guidance to the user how to realign the formwork panel P without any inclination error. The correction instructions ci may also be provided in different formats, in a textual format and/or graphical representation. Alternatively, or cumulatively an acoustic message may be provided as output. Further, in the measurement phase, rotating instructions ri may be calculated and provided, which provide guidance to the user how to rotate the electronic accelerometer unit 14 in the measurement positions.

The processing unit 22 may be configured to execute the decision algorithm DA for differentiating between a pitch inclination error, a roll in inclination error and an offset error. The processing unit 22 may further be configured to execute a validation algorithm VA. The validation algorithm VA relies on several measurements for one single constructive component P and compares the plurality of measurements with each other. In this way, incorrect measurements may be excluded from further processing and in particular may be neglected for calculating the alignment dataset ADS. This feature improves quality of the alignment procedure. In another embodiment, the validation algorithm VA may be configured to compare the measurements and/or the calculated alignment dataset ADS with reference values from previous measurements, historic data and/or estimated datasets, being provided by an artificial intelligence tool.

Fig. 9 shows the attachment unit 10 in more detail. Two identical attachment units are used where one connects to the top attachment bracket 101 and the other to the bottom attachment bracket 102 by the means of pin 103 on each respective attachment bracket. As can be seen, the attachment unit 10 consists of two pins 91 (also called attachment pints), an eccentric lock mechanism 93 mounted to the lever 92 in a way that the lock mechanism 93 can rotate respective to the lever 92 in order to facilitate both left and right side assembly. Examples where the eccentric lock is rotated in a left and right configuration is given below the detailed view in fig. 9.

The attachment unit 10 serves for attachment of the casing 12 to the panel P by means of pins 91 to be inserted in recesses at the formwork panel P where after the lever 92 with the eccentric lock mechanism 93 is placed on the pin farthest from the device and the latch of the lock mechanism 93 is placed on the other pin. The lever 92 in turn connects to the pin 103 of the attachment brackets 101, 102 in such a way that the force exerted by the eccentric lock when actuated presses the attachment brackets 101, 102 to the panel P.

The device (with the attachment unit und the casing) is attached to the constructive component by means of the following procedure:
1. The two attachment pins 91 are inserted into the two corresponding receptacles or holes in the constructive component.
2.The device is located so that the top and bottom fixing brackets 101, 102 makes contact to the webbing of the constructive component P.
3. The lever 92 is placed so that it connects the engagement pin 103 on the fixing bracket to the attachment pin 91 farthest away from the casing.
4. The latch of the eccentric lock mechanism 93 is placed on the attachment pin 91 closest to the casing, thereafter, the eccentric lock mechanism is actuated so that the lever 92 pushes the device firmly to the points on the webbing of the constructive component where the fixing bracket makes contact.
5. With the device now held in place by the upper mount step 1, 3, 4 is repeated on the lower mount.

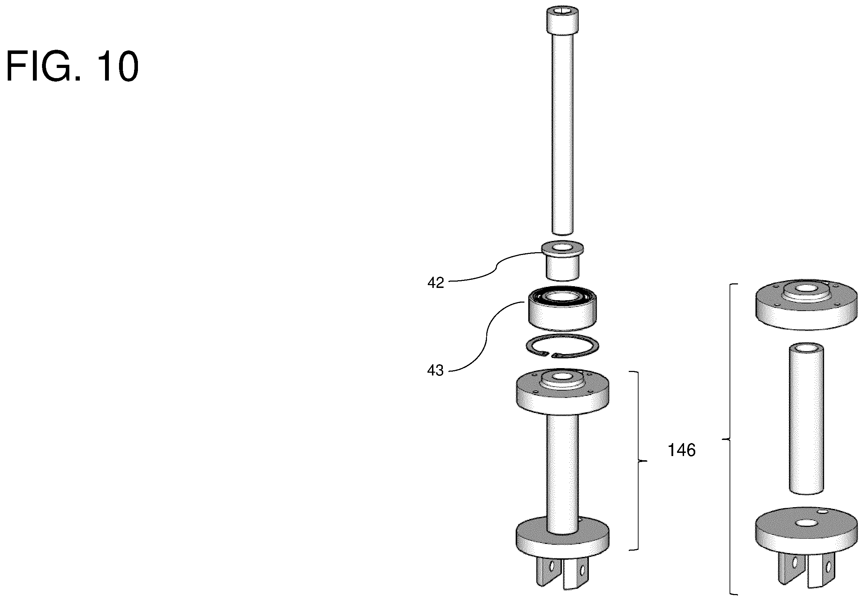

**Fig. 10** shows the support structure 146 for the electronic accelerometer unit 14 in more detail. The rotating hub 42 engages with the angular contact bearing 43. The support structure 146 is shown in a retracted manner on the right side in Fig. 10.

In sum, the present invention relates to an alignment system. The alignment system may comprise:
- An upper attachment unit (i.e. upper part of the attachment unit) non-permanently attached to the formwork panel;
- A rotatable electronic unit (described above as electronic accelerometer unit) with a reference center fixed in the upper attachment unit and separated from the fixed center by the means of an angular contact bearing so that the electronic unit can be rotated manually (by muscle power) with respect to the fixed reference center and the upper attachment unit;
- A pendulum unit, with the pendulum attached with its pivoting point in the lower part of the (rotatable) electronic unit;
- A laser emitter permanently attached in the bottom of the pendulum;
- A bottom attachment unit (i.e. lower part of the attachment unit) non-permanently attached to the formwork panel;
- A casing tube permanently attached to the electronic unit protecting the pendulum and the electronics; The casing can rotate freely inside the bottom attachment unit by the means of a Teflon sliding ring.

Moreover, an output device (which may e.g. be implemented on a mobile device) for providing the alignment dataset is provided.

Wherever not already described explicitly, individual embodiments, or their individual aspects and features, described in relation to the drawings can be combined or exchanged with one another without limiting or widening the scope of the described invention, whenever such a combination or exchange is meaningful and in the sense of this invention. Advantages which are described with respect to a particular embodiment of present invention or with respect to a particular figure are, wherever applicable, also advantages of other embodiments of the present invention.

Any reference signs in the claims should not be construed as limiting the scope.

### List of reference signs

- 100: alignment system
- ADS: alignment dataset
- META: meta data
- P: constructive component, in particular formwork panel

- 10: attachment unit
- 101, 102: top fixing bracket, bottom fixing bracket
- 103: engagement pin to connect attachment unit
- 91: pins for engagement with aperture in the constructive component
- 92: lever
- 93: rotatable eccentric lock mechanism

- 12: casing

- 14: electronic accelerometer unit
- 141, 142: first and second accelerometer sensor
- 143: connection module for data transfer
- 41: fixed bearing attachment
- 42: rotating hub
- 43: angular contact bearing
- 44: sealing
- 45: spring loaded steel ball

- 144: microcontroller of the accelerometer unit
- 145: power supply, in particular battery unit or energy harvesting unit
- 146: support structure
- 147: rectangular circuit board
- 148: circular circuit board
- 149: local storage on electronic accelerometer unit

- 16: pendulum unit
- 161: pivot point
- 162: pendulum
- 163: pendulum ballast
- 164: laser emitter
- 165: pendulum support structure

- 18: receiver unit
- 180: housing
- 181: adjustment means, in particular adjustment knobs
- 182: Fresnel lens
- 183: image sensor
- 184: levelling means
- 185: microprocessor of the receiver unit
- 186: connection module/ interface of the receiver unit
- 187: adjustment plate
- 188: helical spring
- 20: base plate

- 22: processing unit

- 24: output device

- 26: electronic device, in particular mobile device

- S1: Measuring a gravitational field strength
- S2: providing the gravitational data item
- S3: calculating correction instructions
- S4: emitting a laser beam
- S5: measuring a reception area of the laser beam on the receiver unit 18
- S6: providing a pendulum data item

- rep: roll error portion
- pep: pitch error portion
- oep: offset error portion

- ri: rotating instructions
- ii: installation instructions
- ai: attachment instructions
- ci: correction instructions

- gdi: gravitational data item
- pdi: pendulum data item
- DA: decision algorithm
- VA: validation algorithm

## Claims

1. An alignment system (100) for calculating an alignment dataset (ADS) for alignment of a constructive component (P), in particular a formwork panel, comprising:
- An attachment unit (10), which is configured to be non-permanently attached at the constructive component (P) and which is further configured to engage with a casing (12);
- the casing (12), which cases:
- an electronic accelerometer unit (14) and
- a pendulum unit (16) being attached at a bottom part of the electronic accelerometer unit (14) so that the pendulum unit (16) can swing with two degrees of freedom around a pivot point (161), and wherein at the bottom part of a pendulum support structure (165) of said pendulum unit (16), a laser emitter (164) is attached which is configured to emit a laser beam;
- a receiver unit (18), mounted at a base plate (20) and which is configured to receive the laser beam spatially resolved;
- a processing unit (22) for calculating the alignment dataset (ADS), wherein the processing unit (22) is in data connection with the receiver unit (18) and with the electronic accelerometer unit (14); and
- an output device (24) for providing the alignment dataset (ADS).

2. The alignment system according to claim 1, wherein the attachment unit (10) comprises at least two separate brackets (101, 102), wherein each of the brackets (101, 102) is configured for being non-permanently attached to the constructive component (P) at pre-defined positions and/or wherein the attachment unit (10) engages with the casing (12) in a sealed manner.

3. The alignment system according to any of the preceding claims, wherein the output device (24) and/or the processing unit (22) is/are formed on a mobile device (26) and/or in the casing (12) and/or on the receiver unit (18).

4. The alignment system according to any of the preceding claims, wherein the data connections between the electronic accelerometer unit (14) with the processing unit (22) and the receiver unit (18) with the processing unit (22) are wireless transmission channels.

5. The alignment system according to any of the preceding claims, wherein the electronic accelerometer unit (14) comprises at least two accelerometer sensors (141, 142), which are attached with a mutual offset and may further comprise a connection module (143), a microcontroller (144) and/or a power supply (145).

6. The alignment system according to any of the preceding claims, wherein the electronic accelerometer unit (14) is rotatable together with the casing (12) and in particular is rotatable between four different pre-defined measurement positions manually.

7. The alignment system according to any of the preceding claims, wherein the receiver unit (18) is adjustably attached to the base plate (20) by means of adjustment means (181).

8. The alignment system according to any of the preceding claims, wherein the receiver unit (18) comprises a housing (180) for covering:
- a fresnel lens (182) for collecting and focusing the received laser beam,
- an image sensor (183) and
wherein the receiver unit (18) comprises a levelling means (184) for levelling the receiver unit (18) so that it is aligned perpendicular to the earths gravitational field vector.

9. A casing (12) for use in an alignment system according to any of the system claims above, wherein the casing (12) cases:
- an electronic accelerometer unit (14) and
- a pendulum unit (16) being attached at a bottom part of the electronic accelerometer unit (14) so that the pendulum unit (16) can swing with two degrees of freedom around a pivot point, and wherein at the bottom part of a pendulum support structure (165), a laser emitter (164) is attached which is configured to emit a laser beam.

10. A method for calculating an alignment dataset (ADS) for alignment of a constructive component (P), using an alignment system (100) according to any of claims 1 to 8, the method comprises the steps of:
- Measuring (S1) at least one gravitational field strength vector by means of the electronic accelerometer unit (14), being aligned in parallel with the constructive component (P) and providing (S2) a gravitational data item (gdi) as a first part of the alignment dataset (ADS), indicating, if an inclination error for the constructive component (P) exists and if yes: Calculating (S3) correction instructions (ci) by the processing unit (22) for re-aligning the constructive component (P) to minimize the inclination error;
- Emitting (S4) a laser beam by the laser emitter (164), being attached to the pendulum support structure (165);
- Measuring (S5) a reception area of the laser beam on the receiver unit (18) and in particular measuring, if the reception area of the laser beam is within a target area and based thereon: providing (S6) a pendulum data item (pdi) as a second part of the alignment dataset (ADS).

11. The method according to any of directly preceding method claims, wherein the method comprises executing a decision algorithm (DA) on the processing unit (22) for differentiating between an inclination error and an offset error, and in particular wherein the alignment dataset (ADS) comprises:
- a roll error portion (rep), indicating a misalignment of the constructive component (P), in particular an inclination error due to a roll error,
- a pitch error portion (pep), indicating a misalignment of the constructive component (P) in particular an inclination error due to a pitch error;
- an offset error portion (oep), indicating a misalignment of the constructive component (P) in particular due to a lateral offset.

12. The method according to any of directly preceding method claims, wherein the processing unit (22) is further adapted to calculate operating instructions, comprising:
- Rotating instructions (ri) for rotating the electronic accelerometer unit (14) in different measurement positions for subsequent measurements;
- Installation instructions (ii) for aligning an image sensor plane of the receiver unit (18) on a base plate (20) and/or
- Attachment instructions (ai) for attaching the attachment unit (10) to the constructive component (P);
- Correction instructions (ci) for guiding the user how to correct the detected error and to re-align the constructive component (P).

13. The method according to the directly preceding method claim, wherein the rotating instructions (ri) are calculated dynamically in reply to position signals, received by sensors, indicating an angular position of the electronic accelerometer unit (14) with respect to the constructive component (P).

14. The method according to any of directly preceding method claims, wherein one alignment dataset (ADS) is calculated each at two or more positions of the constructive component (P), which may be fed in a validation algorithm (VA).

15. A computer program comprising a computer program code, the computer program code causing the processing unit (22) of the alignment system (100) of any of the claims 1 to 8 to execute the steps of the method of any of the preceding method claims.

## Patentansprüche

1. Ausrichtungssystem (100) zum Berechnen eines Ausrichtungsdatensatzes (ADS) zum Ausrichten eines konstruktiven Bauteils (P), insbesondere eines Paneels einer Schalung, umfassend:
- eine Befestigungseinheit (10), die eingerichtet ist, um nicht permanent an dem konstruktiven Bauteil (P) befestigt zu werden, und die ferner eingerichtet ist, um mit einem Gehäuse (12) in Eingriff zu kommen;
- das Gehäuse (12), das
- eine elektronische Beschleunigungseinheit (14) und
- eine Pendeleinheit (16), die an einem unteren Teil der elektronischen Beschleunigungseinheit (14) angebracht ist, so dass die Pendeleinheit (16) mit zwei Freiheitsgraden um einen Drehpunkt (161) schwingen kann, und wobei an dem unteren Teil einer Pendelstützstruktur (165) der Pendeleinheit (16) ein Lasersender (164) angebracht ist, der eingerichtet ist, einen Laserstrahl zu emittieren;
- eine Empfangseinheit (18), die an einer Grundplatte (20) angebracht ist und die eingerichtet ist, den Laserstrahl räumlich aufgelöst zu empfangen;
- eine Verarbeitungseinheit (22) zum Berechnen des Ausrichtungsdatensatzes (ADS), wobei die Verarbeitungseinheit (22) in Datenverbindung mit der Empfangseinheit (18) und mit der elektronischen Beschleunigungssensoreinheit (14) steht; und
- eine Ausgabevorrichtung (24) zum Bereitstellen des Ausrichtungsdatensatzes (ADS).

2. Ausrichtsystem nach Anspruch 1, wobei die Befestigungseinheit (10) zumindest zwei separate Halterungen (101, 102) umfasst, wobei jede der Halterungen (101, 102) für eine nicht permanente Befestigung an dem konstruktiven Bauteil (P) an vordefinierten Positionen eingerichtet ist und/oder wobei die Befestigungseinheit (10) abgedichtet mit dem Gehäuse (12) in Eingriff steht.

3. Ausrichtungssystem nach einem der vorhergehenden Ansprüche, wobei die Ausgabevorrichtung (24) und/oder die Verarbeitungseinheit (22) auf einer mobilen Vorrichtung (26) und/oder in dem Gehäuse (12) und/oder auf der Empfängereinheit (18) ausgebildet ist/sind.

4. Ausrichtungssystem nach einem der vorhergehenden Ansprüche, wobei die Datenverbindungen zwischen der elektronischen Beschleunigungssensoreinheit (14) mit der Verarbeitungseinheit (22) und der Empfängereinheit (18) mit der Verarbeitungseinheit (22) drahtlose Übertragungskanäle sind.

5. Ausrichtungssystem nach einem der vorhergehenden Ansprüche, wobei die elektronische Beschleunigungssensoreinheit (14) zumindest zwei Beschleunigungssensoren (141, 142) umfasst, die mit einem gegenseitigen Versatz angebracht sind und ferner ein Verbindungsmodul (143), einen Mikrocontroller (144) und/oder eine Stromversorgung (145) umfassen können.

6. Ausrichtungssystem nach einem der vorhergehenden Ansprüche, wobei die elektronische Beschleunigungssensoreinheit (14) zusammen mit dem Gehäuse (12) drehbar ist und insbesondere manuell zwischen vier verschiedenen vordefinierten Messpositionen drehbar ist.

7. Ausrichtungssystem nach einem der vorhergehenden Ansprüche, wobei die Empfängereinheit (18) mittels Einstellmitteln (181) einstellbar an der Grundplatte (20) angebracht ist.

8. Ausrichtungssystem nach einem der vorhergehenden Ansprüche, wobei die Empfängereinheit (18) ein Gehäuse (180) umfasst, das Folgendes abdeckt:
- eine Fresnellinse (182) zum Sammeln und Fokussieren des empfangenen Laserstrahls,
- einen Bildsensor (183) umfasst, und wobei die Empfängereinheit (18) eine Nivelliereinrichtung (184) zum Nivellieren der Empfängereinheit (18) umfasst, so dass sie senkrecht zum Gravitationsfeldvektor der Erde ausgerichtet ist.

9. Gehäuse (12) zur Verwendung in einem Ausrichtungssystem nach einem der vorhergehenden Systemansprüche, wobei das Gehäuse (12) umfasst, eine elektronische Beschleunigungssensoreinheit (14) und eine Pendeleinheit (16), die an einem unteren Teil der elektronischen Beschleunigungssensoreinheit (14) angebracht ist, so dass die Pendeleinheit (16) mit zwei Freiheitsgraden um einen Drehpunkt schwingen kann, und wobei an dem unteren Teil einer Pendelstützstruktur (165) ein Lasersender (164) angebracht ist, der eingerichtet ist, einen Laserstrahl zu emittieren.

10. Verfahren zum Berechnen eines Ausrichtungsdatensatzes (ADS) zum Ausrichten eines konstruktiven Bauteils unter Verwendung eines Ausrichtungssystems (100) gemäß einem der Ansprüche 1 bis 8, wobei das Verfahren die folgenden Schritte umfasst:
- Messen (S1) zumindest eines Gravitationsfeldstärkevektors mittels der elektronischen Beschleunigungssensoreinheit (14), die parallel zu dem konstruktiven Bauteil (P) ausgerichtet ist, und Bereitstellen (S2) eines Gravitationsdatenelements (gdi) als ersten Teil des Ausrichtungsdatensatzes (ADS), (ADS), der angibt, ob ein Neigungsfehler für die konstruktive Komponente (P) vorliegt, und wenn ja: Berechnen (S3) von Korrekturanweisungen (ci) durch die Verarbeitungseinheit (22) zum erneuten Ausrichten der konstruktiven Komponente (P), um den Neigungsfehler zu minimieren;
- Aussenden (S4) eines Laserstrahls durch den Lasersender (164), der an der Pendelstützstruktur (165) angebracht ist;
- Messen (S5) eines Empfangsbereichs des Laserstrahls auf der Empfängereinheit (18) und insbesondere Messen, ob der Empfangsbereich des Laserstrahls innerhalb eines Zielbereichs liegt, und darauf basierend: Bereitstellen (S6) eines Pendeldatenelements (pdi) als zweiten Teil des Ausrichtungsdatensatzes (ADS).

11. Verfahren nach einem der vorhergehenden Verfahrensansprüche, wobei das Verfahren die Ausführung eines Entscheidungsalgorithmus (DA) auf der Verarbeitungseinheit (22) umfasst, um zwischen einem Neigungsfehler und einem Versatzfehler zu unterscheiden, und wobei der Ausrichtungsdatensatz (ADS) insbesondere Folgendes umfasst:
- einen Rollfehlerabschnitt (rep), der eine Fehlausrichtung der konstruktiven Komponente (P) angibt, insbesondere einen Neigungsfehler aufgrund eines Rollfehlers,
- einen Nickfehlerabschnitt (pep), der eine Fehlausrichtung der konstruktiven Komponente (P) angibt, insbesondere einen Neigungsfehler aufgrund eines Nickfehlers;
- einen Versatzfehlerabschnitt (oep), der eine Fehlausrichtung der konstruktiven Komponente (P) angibt, insbesondere aufgrund eines seitlichen Versatzes.

12. Verfahren nach einem der vorhergehenden Verfahrensansprüche, wobei die Verarbeitungseinheit (22) ferner eingerichtet ist, um Betriebsanweisungen zu berechnen, umfassend:
- Drehanweisungen (ri) zum Drehen der elektronischen Beschleunigungseinheit (14) in verschiedene Messpositionen für nachfolgende Messungen;
- Installationsanweisungen (ii) zum Ausrichten einer Bildsensorebene der Empfängereinheit (18) auf einer Grundplatte (20) und/oder
- Befestigungsanweisungen (ai) zum Befestigen der Befestigungseinheit (10) an dem konstruktiven Bauteil (P);
- Korrekturanweisungen (ci) zum Anleiten des Benutzers, wie er den erfassten Fehler korrigieren und das konstruktive Bauteil (P) neu ausrichten kann.

13. Verfahren gemäß dem unmittelbar vorhergehenden Verfahrensanspruch, wobei die Rotationsanweisungen (ri) dynamisch als Antwort auf Positionssignale berechnet werden, die von Sensoren empfangen werden und eine Winkelposition der elektronischen Beschleunigungseinheit (14) in Bezug auf das konstruktive Bauteil (P) angeben.

14. Verfahren nach einem der unmittelbar vorhergehenden Verfahrensansprüche, wobei ein Ausrichtungsdatensatz (ADS) jeweils an zwei oder mehr Positionen der konstruktiven Komponente (P) berechnet wird, die in einen Validierungsalgorithmus (VA) eingespeist werden können.

15. Computerprogramm, umfassend einen Computerprogrammcode, wobei der Computerprogrammcode die Verarbeitungseinheit (22) des Ausrichtungssystems (100) nach einem der Ansprüche 1 bis 8 veranlasst, die Schritte des Verfahrens nach einem der vorhergehenden Ansprüche auszuführen.

## Revendications

1. Système d'alignement (100) pour calculer un ensemble de données d'alignement (ADS) pour l'alignement d'un composant de construction (P), en particulier d'un panneau de coffrage, comprenant :
- une unité de fixation (10) qui est conçue pour être fixée de manière non permanente au composant de construction (P) et qui est en outre conçue pour s'engager dans un fourreau (12) ;
- le fourreau (12), abritant :
- une unité d'accéléromètre électronique (14), et
- une unité à pendule (16) fixée à une partie inférieure de l'unité d'accéléromètre électronique (14) de sorte que l'unité à pendule (16) peut osciller avec deux degrés de liberté autour d'un point de pivot (161), et un émetteur laser (164) est fixé à la partie inférieure d'une structure de support de pendule (165) de ladite unité à pendule (16), qui est conçu pour émettre un faisceau laser ;
- une unité de réception (18) montée sur une plaque de base (20) et conçue pour recevoir le faisceau laser à résolution spatiale ;
- une unité de traitement (22) pour calculer l'ensemble de données d'alignement (ADS), l'unité de traitement (22) étant en connexion de données avec l'unité de réception (18) et avec l'unité d'accéléromètre électronique (14) ; et
- un dispositif de sortie (24) pour fournir l'ensemble de données d'alignement (ADS).

2. Système d'alignement selon la revendication 1,
dans lequel l'unité de fixation (10) comprend au moins deux supports séparés (101, 102), chacun des supports (101, 102) étant conçu pour être fixé de manière non permanente au composant de construction (P) à des positions prédéfinies, et/ou l'unité de fixation (10) s'engageant de manière étanche dans le fourreau (12).

3. Système d'alignement selon l'une des revendications précédentes,
dans lequel le dispositif de sortie (24) et/ou l'unité de traitement (22) est/sont formé(s) sur un dispositif mobile (26) et/ou dans le fourreau (12) et/ou sur l'unité de réception (18).

4. Système d'alignement selon l'une des revendications précédentes,
dans lequel les connexions de données entre l'unité d'accéléromètre électronique (14) et l'unité de traitement (22) et entre l'unité de réception (18) et l'unité de traitement (22) sont des canaux de transmission sans fil.

5. Système d'alignement selon l'une des revendications précédentes,
dans lequel l'unité d'accéléromètre électronique (14) comprend au moins deux capteurs d'accéléromètre (141, 142) fixés avec un décalage mutuel et peut comprendre en outre un module de connexion (143), un microcontrôleur (144) et/ou une alimentation électrique (145).

6. Système d'alignement selon l'une des revendications précédentes,
dans lequel l'unité d'accéléromètre électronique (14) est rotative conjointement avec le fourreau (12) et, en particulier, est rotative manuellement entre quatre positions de mesure prédéfinies différentes.

7. Système d'alignement selon l'une des revendications précédentes,
dans lequel l'unité de réception (18) est fixée de manière ajustable à la plaque de base (20) au moyen d'un dispositif d'ajustement (181).

8. Système d'alignement selon l'une des revendications précédentes,
dans lequel l'unité de réception (18) comprend un logement (180) destiné à recouvrir :
- une lentille de Fresnel (182) pour collecter et focaliser le faisceau laser reçu,
- un capteur d'image (183),
et dans lequel l'unité de réception (18) comprend un moyen de nivellement (184) pour niveler l'unité de réception (18) de manière à ce qu'elle soit alignée perpendiculairement au vecteur du champ gravitationnel terrestre.

9. Fourreau (12) destiné à être utilisé dans un système d'alignement selon l'une des revendications précédentes,
dans lequel le fourreau (12) abrite :
- une unité d'accéléromètre électronique (14), et
- une unité à pendule (16) fixée à une partie inférieure de l'unité d'accéléromètre électronique (14) de sorte que l'unité à pendule (16) peut osciller avec deux degrés de liberté autour d'un point de pivot, et un émetteur laser (164) est fixé à la partie inférieure d'une structure de support de pendule (165), qui est conçu pour émettre un faisceau laser.

10. Procédé de calcul d'un ensemble de données d'alignement (ADS) pour l'alignement d'un composant de construction (P) à l'aide d'un système d'alignement (100) selon l'une des revendications 1 à 8, le procédé comprenant les étapes consistant à :
- mesurer (S1) au moins un vecteur d'intensité du champ gravitationnel au moyen de l'unité d'accéléromètre électronique (14), aligné parallèlement au composant de construction (P), et fournir (S2) un élément de données gravitationnelles (gdi) en tant que première partie de l'ensemble de données d'alignement (ADS), indiquant s'il existe une erreur d'inclinaison du composant de construction (P) et, dans le cas affirmatif : calculer (S3) des instructions de correction (ci) par l'unité de traitement (22) pour réaligner le composant de construction (P), afin de minimiser l'erreur d'inclinaison ;
- émettre (S4) un faisceau laser par l'émetteur laser (164), fixé à la structure de support de pendule (165) ;
- mesurer (S5) une zone de réception du faisceau laser sur l'unité de réception (18) et, en particulier, mesurer si la zone de réception du faisceau laser se trouve dans une zone cible et, sur cette base, fournir (S6) un élément de données de pendule (pdi) en tant que deuxième partie de l'ensemble de données d'alignement (ADS).

11. Procédé selon la revendication de procédé directement précédente, dans lequel le procédé comprend l'exécution d'un algorithme de décision (DA) sur l'unité de traitement (22) pour différencier une erreur d'inclinaison et une erreur de décalage, et
en particulier, l'ensemble de données d'alignement (ADS) comprend :
- une partie d'erreur de roulis (rep), indiquant un défaut d'alignement du composant de construction (P), en particulier une erreur d'inclinaison due à une erreur de roulis,
- une partie d'erreur de tangage (pep), indiquant un défaut d'alignement du composant de construction (P), en particulier une erreur d'inclinaison due à une erreur de tangage ;
- une partie d'erreur de décalage (oep), indiquant un défaut d'alignement du composant de construction (P), en particulier dû à un décalage latéral.

12. Procédé selon l'une des revendications de procédé directement précédentes,
dans lequel l'unité de traitement (22) est en outre adaptée pour calculer des instructions de fonctionnement, comprenant :
- des instructions de rotation (ri) pour faire tourner l'unité d'accéléromètre électronique (14) dans différentes positions de mesure pour des mesures ultérieures ;
- des instructions d'installation (ii) pour aligner un plan de capteur d'image de l'unité de réception (18) sur une plaque de base (20), et/ou
- des instructions de fixation (ai) pour fixer l'unité de fixation (10) au composant de construction (P) ;
- des instructions de correction (ci) pour guider l'utilisateur pour savoir comment corriger l'erreur détectée et réaligner le composant de construction (P).

13. Procédé selon la revendication de procédé directement précédente, dans lequel les instructions de rotation (ri) sont calculées dynamiquement en réponse à des signaux de position, reçus par des capteurs, indiquant une position angulaire de l'unité d'accéléromètre électronique (14) par rapport au composant de construction (P).

14. Procédé selon l'une des revendications de procédé directement précédentes,
dans lequel un ensemble de données d'alignement (ADS) est calculé à deux positions ou plus du composant de construction (P), qui peuvent être introduites dans un algorithme de validation (VA).

15. Programme informatique comprenant un code de programme informatique, le code de programme informatique amenant l'unité de traitement (22) du système d'alignement (100) selon l'une des revendications 1 à 8 à exécuter les étapes du procédé selon l'une des revendications de procédé précédentes.
